# EUROPEAN PATENT APPLICATION

(11) **EP 2 639 418 A1**
(43) Date of publication of application: **18.09.2013**
(21) Application number: 12766848.1
(22) Date of filing: 04.01.2012
(51) Int. Cl.: F01N 3/025, F01N 3/023, F01N 3/029, F01N 3/36

(54) **EXHAUST-HEATING METHOD**

(71) Applicant: TOYOTA JIDOSHA KABUSHIKI KAISHA, Toyota-shi, Aichi-ken, 471-8571 (JP)
(72) Inventor: TSUJIMOTO, Kenichi, Toyota-shi, Aichi 471-8571 (JP)
(74) Representative: Intès, Didier Gérard André
(86) International application number: PCT/JP2012/000012
(87) International publication number: WO 2013/102947

(57) **Abstract**

A method according to the present invention heats exhaust introduced to an exhaust emission purifier (26) by injecting fuel into an exhaust passage (23a) through a fuel addition valve toward a heat generating portion (28a) of a glow plug (28) disposed in the exhaust passage located upstream of the exhaust emission purifier, and then igniting the fuel. In the method, a rate of the fuel injected through the fuel addition valve (27) which directly contacts the heat generating portion (28a) is set to between 8% and 55%.

## Description

### METHOD FOR HEATING EXHAUST

### Technical Field

The present invention relates to a method of heating exhaust gas to be introduced into an exhaust gas purifying device by supplying fuel into an exhaust passage from a fuel supply valve disposed upstream of the exhaust gas purifying device in an exhaust pipe, and then by heating and igniting the fuel.

### Background Art

In recent years, coping with strict emission standards set on internal combustion engines has lead to a necessity for facilitating the activation of an exhaust gas purifying device at the start of its internal combustion engine, maintaining its active state during the operation of the internal combustion engine, and so on. In this respect, Patent Literature 1 and the like have proposed internal combustion engines in which an exhaust gas heating device is installed upstream of an exhaust gas purifying device in an exhaust passage. This exhaust gas heating device generates heating gas within exhaust gas and supplies this generated heating gas into the exhaust gas purifying device given at the downstream side to thereby facilitate the activation of the exhaust gas purifying device and maintain its active state. To do so, the exhaust gas heating device generally includes a fuel supply valve which adds fuel into the exhaust passage, and an igniter such as a glow plug which heats and ignites the fuel to generate heating gas. Meanwhile, in the conventional exhaust gas heating device disclosed in Patent Literature 1, the igniter is disposed in proximity to the fuel supply valve. Hence, the fuel supplied into the exhaust passage from the fuel supply valve and the exhaust gas may fail to be mixed sufficiently, leading to incomplete combustion of the ignited fuel in some cases. To solve this, Patent Literature 1 proposes an idea that a receiving plate which receives the fuel injected from the fuel supply valve and scatters that fuel inside the exhaust passage is installed in the exhaust passage.

### Citation List

### Patent Literature

PTL1: Japanese Patent Laid-Open No. 2010-084710

### Summary of Invention

### Technical Problem

A recent study of the exhaust heating apparatus disclosed in Patent Literature 1 confirms that fuel from a fuel addition valve impinging on a heat generating portion of ignition means is not directly ignited by the heat generating portion. That is, the study finds that the fuel having impinged on the heat generating portion is heated and vaporized by the heat generating portion and then ignited and that the fire spreads to mixed gas of fuel droplets suspended around the heat generating portion and exhaust flowing in from an upstream side of an exhaust passage, resulting in diffusion of the combustion. Thus, when the fuel is injected toward the heat generating portion of the ignition means so as to impinge on the heat generating portion, the heat generating portion may be cooled and fail to achieve appropriate ignition or the fuel, even when successfully combusted, may fail to diffuse properly, depending on conditions such as the amount and rate of the fuel. In this case, an increased amount of unburned HC may be generated and flow out directly toward a downstream side of the exhaust passage, or an increased amount of soot may be generated.

An object of the present invention is to provide a method for enabling generation of unburned HC and soot to be suppressed compared to the conventional technique, if the exhaust heating apparatus is used.

The present invention is based on the present inventors' novel knowledge that the rate of a portion of the fuel injected through the fuel addition valve which directly contacts the heat generating portion of the ignition means is important for generation of unburned HC and soot. That is, a method according to the present invention of heating exhaust introduced to an exhaust emission purifier by injecting fuel into an exhaust passage through a fuel addition valve toward a heat generating portion of an ignition means disposed in the exhaust passage located upstream of the exhaust emission purifier, and then igniting the fuel, is characterized in that a rate of the fuel injected through the fuel addition valve which directly contacts the heat generating portion is set to between 8% and 55%.

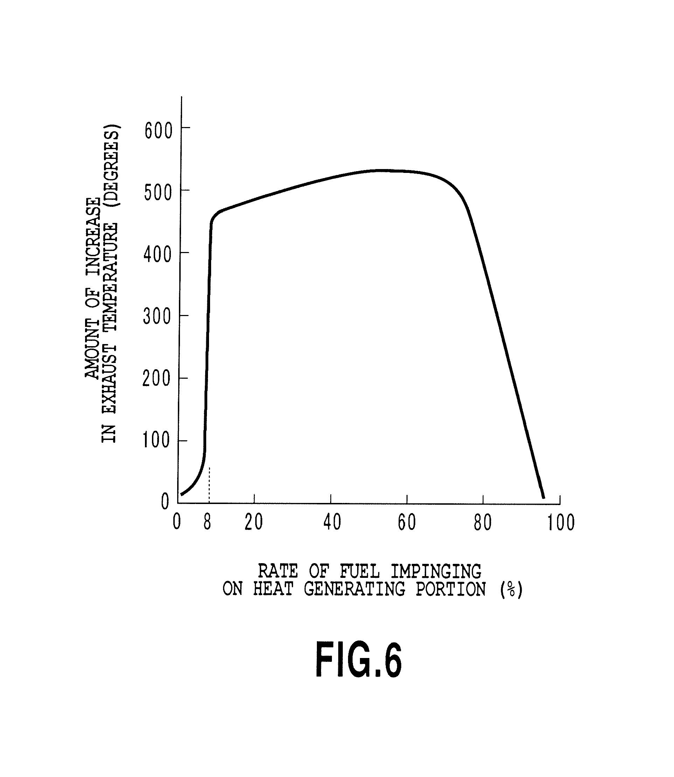

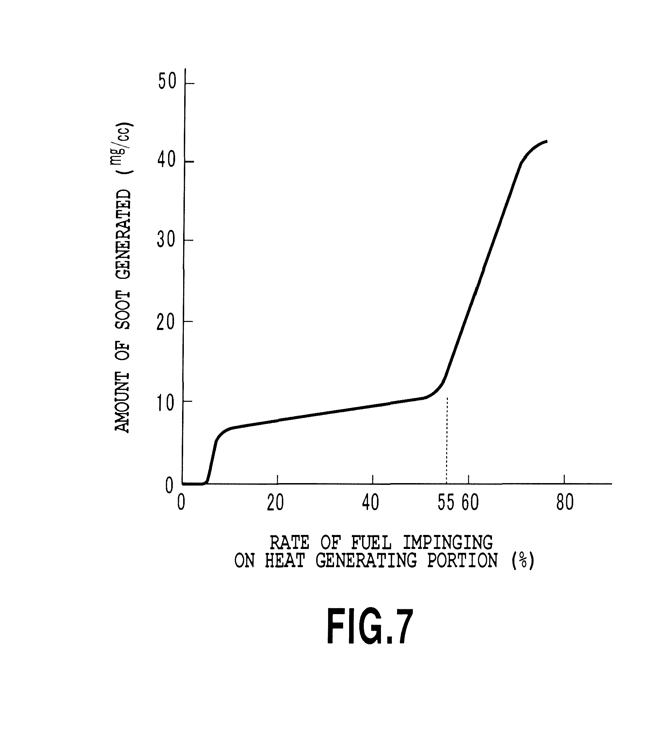

Here, the following is shown in Fig. 6: the relationship between the rate of a portion of the fuel injected through the fuel addition valve which directly contacts the heat generating portion of the ignition means (this rate is hereinafter referred to as the rate of fuel impinging on the heating portion) and the amount of increase in exhaust temperature. The relationship between the rate of fuel impinging on the heat generating portion and the amount of soot generated per cubic centimeter of fuel is shown in Fig. 7. As apparent from Fig. 6 and Fig. 7, if the rate of fuel impinging on the heat generating portion is lower than 8%, the heat generating portion ignites the fuel but fails to effectively generate mixed gas around the heat generating portion, hindering combustion from diffusing successfully. Thus, an increased amount of unburned HC passes through the exhaust heating apparatus without being ignited, rapidly making the combustion improper. In contrast, if the rate of fuel impinging on the heat generating portion is greater than 55%, the amount of soot generated increases rapidly.

In the method for heating exhaust according to the present invention, an amount of fuel injected, during a single injection operation, through the fuel addition valve when the fuel is intermittently injected into the exhaust passage, is preferably set to between 10 mm³ and 75 mm³.

Duration of injection through the fuel addition valve during a single injection operation is preferably set to between 1.5 ms and 15 ms.

An amount of fuel injected through the fuel addition valve per unit time is preferably set to between 80 cc and 1,000 cc per minute.

An area of the heat generating portion which overlaps the conical fuel injection region projected on a plane perpendicular to a center axis of the fuel injection region and containing an axis of the heat generating portion may be set to between 8% and 55% of an area of the fuel injection region.

The fuel injected though the fuel injection valve may be light oil or biofuel.

Preferably, the heat generating portion of the ignition means is heated and the fuel is injected into the exhaust passage through the fuel addition valve only if exhaust flowing through the exhaust passage has a flow rate of 50 grams per second or less.

### Advantageous Effects of Invention

The present invention sets the rate of the fuel injected through the fuel addition valve which directly contacts the heat generating portion to between 8% and 55%. This enables sufficient mixed gas to be formed around the heat generating portion without excessively cooling the heat generating portion. As a result, the amount of soot generated can be restrained from increasing, with proper combustion constantly achieved.

If the amount of fuel injected, during a single injection operation, through the fuel addition valve when the fuel is intermittently injected into the exhaust passage, is set to between 10 mm³ and 75 mm³, proper combustion can be constantly and more reliably achieved, and the amount of soot generated can be more reliably restrained from increasing.

If the duration of injection through the fuel addition valve during a single injection operation is set to between 1.5 ms and 15 ms, the fuel can be constantly appropriately ignited and proper combustion can be ensured.

If the amount of fuel injected through the fuel addition valve per unit time is set to between 80 cc and 1,000 cc per minute, proper initial frame can be formed and an appropriate flame propagation state can be maintained. Thus, proper combustion can be more reliably achieved.

The present invention sets the area of the heat generating portion which overlaps the conical fuel injection region projected on the plane perpendicular to the center axis of the fuel injection region and containing the axis of the heat generating portion, to between 8% and 55% of an area of the fuel injection region. This allows easy setting of a preferable relative position between the fuel addition valve and the heat generating portion of the ignition means.

Even if the fuel injected though the fuel injection valve is light oil or biofuel, ignition is unlikely to be delayed, resulting in appropriate flame propagation and constantly proper combustion.

The present invention heats the heat generating portion of the ignition means and injects the fuel into the exhaust passage through the fuel addition valve only if exhaust flowing through the exhaust passage has a flow rate of 50 grams per second or less. This maintains an air-fuel ratio measured around the heat generating portion in a rich state, allowing the fuel to be constantly properly ignited.

### Brief Description of Drawings

[Fig. 1] Fig. 1 is a conceptual drawing of an engine system according to an embodiment in which a method for heating exhaust according to the present invention is applied to a vehicle with a multicylinder internal combustion engine;
[Fig. 2] Fig. 2 is a control block diagram of an essential part of the embodiment shown in Fig. 1;
[Fig. 3] Fig. 3 is an enlarged cross-sectional view of an essential part of an exhaust heating apparatus in the embodiment shown in Fig. 2;
[Fig. 4] Fig. 4 is a cross-sectional view taken along line IV-IV in Fig. 3;
[Fig. 5] Fig. 5 is a flowchart illustrating a control procedure for an exhaust heating process according to the present embodiment;
[Fig. 6] Fig. 6 is a graph illustrating the relationship between the rate of a portion of fuel which impinges on a heat generating portion and the amount of increase in exhaust temperature; and [Fig. 7] Fig. 7 is a graph illustrating the relationship between the rate of a portion of the fuel which impinges on the heat generating portion and the amount of soot generated.

### Description of Embodiments

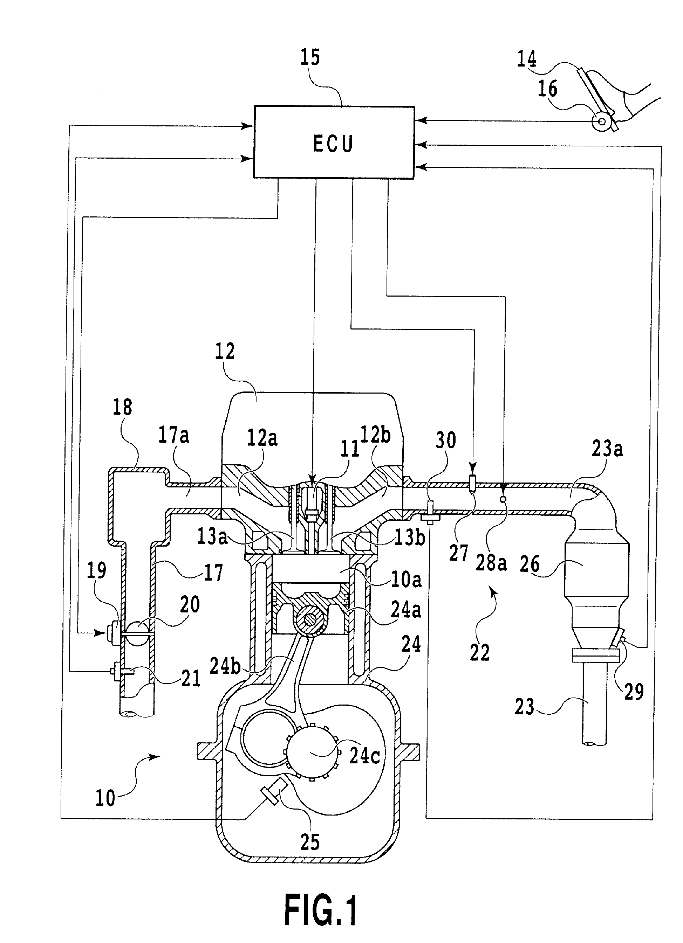

An embodiment in which a method for heating exhaust according to the present invention is applied to a vehicle with a compression-ignition multicylinder internal combustion engine mounted therein will be described below in detail with reference to Fig. 1 to Fig. 5. However, the present invention is not limited to the embodiment, and the construction thereof may be freely modified corresponding to required characteristics. The present invention is effectively applied to a spark ignition type internal combustion engine in which gasoline, alcohol, LNG (Liquefied Natural Gas) or the like is used as fuel to be ignited by a spark plug, for example.

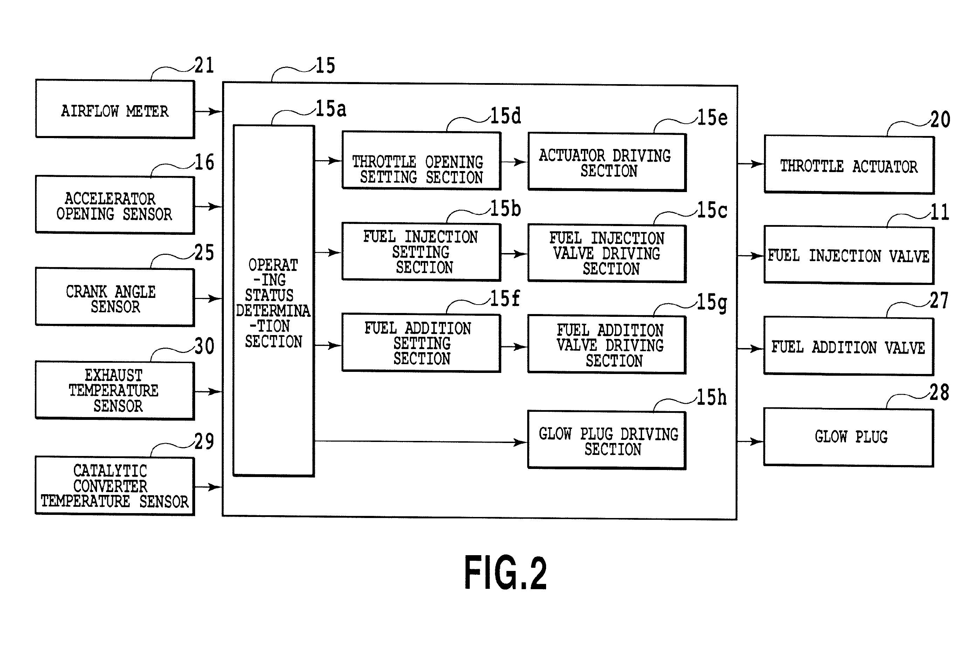

Fig. 1 schematically shows an essential part of an engine system according to the embodiment. Fig. 2 schematically shows control blocks for the essential part. The following are omitted from Fig. 1: a valve gear and a muffler for intake and exhaust of an engine 10, and an exhaust turbocharger, an EGR system, and the like which are commonly used as auxiliary machines for the engine 10. Furthermore, it should be noted that some of various sensors required for smooth operation of the engine are omitted for convenience.

The engine 10 according to the present embodiment is a compression-ignition multicylinder internal combustion engine that spontaneously ignites light oil, biofuel, or a mixture thereof as a fuel by injecting the fuel directly into a combustion chamber 10a in a compressed state through a fuel injection valve 11. However, the engine 10 may be a single cylinder engine in connection with the characteristics of the present invention.

A cylinder head 12 includes an intake port 12a and an exhaust port 12b formed therein and each located opposite a combustion chamber 10a, and incorporates a valve gear (not shown in the drawings) including an intake valve 13a that opens and closes the intake port 12a and an exhaust valve 13b that opens and closes the exhaust port 12b. The fuel injection valve 11 located opposite the center of an upper end of the combustion chamber 10a is also assembled to the cylinder head 12 so as to be sandwiched between the intake valve 13a and the exhaust port 13b. The amount of fuel fed into the combustion chamber 10a through the fuel injection valve 11 as well as injection timing are controlled by an ECU (Electronic Control Unit) based on the operating status of the vehicle including the position of an accelerator pedal 14 pressed by a driver. The position of the pressed accelerator pedal 14 is detected by an accelerator opening sensor 16, which then outputs detection information to the ECU 15.

The ECU 15 includes an operating status determination section 15a that determines the operating status of the vehicle based on information from the accelerator opening sensor 16 and various sensors described below, a fuel injection setting section 15b, and a fuel injection valve driving section 15c. The fuel injection setting section 15b sets the amount of fuel injected through the fuel injection valve 11 and the injection timing based on the result of the determination by the operating status determination section 15a. The fuel injection valve driving section 15c controls operation of the fuel injection valve 11 so that an amount of fuel set by the fuel injection setting section 15b is injected through the fuel injection valve 11 at a set timing.

A surge tank 18 is formed in the middle of an intake pipe 17 connected to the cylinder head 12 so as to communicate with the intake port 12a and define an intake passage 17a together with the intake port 12a. A throttle valve 20a adapted to adjust the opening of the intake passage 17a via an actuator 19 is incorporated in a part of the intake pipe 17 located upstream of the surge tank 18. Furthermore, an airflow meter 21 is attached to a part of the intake pipe 17 located upstream of the throttle valve 20; the airflow meter 21 detects the flow rate Q_{A} of intake air flowing through the intake passage 17a, and outputs the flow rate Q_{A} to the ECU 15. Instead of the airflow meter 21, an exhaust flow rate sensor with the same configuration as that of the airflow meter 21 may be attached to a part of an exhaust pipe 23 positioned between an exhaust heating apparatus 22 described below and the exhaust port 12b of the cylinder head 12.

The ECU 15 further includes a throttle opening setting section 15d and an actuator driving section 15e. The throttle opening setting section 15d not only sets the position of the pressed accelerator pedal 14 but also sets the opening of the throttle valve 20 based on the result of the determination by the operating status determination section 15a. The actuator driving section 15e controls operation of the throttle actuator 19 so as to open the throttle valve 20 to the degree set by the throttle opening setting section 15d.

A cylinder block 24 in which a piston 24a reciprocates includes a crank angle sensor 25 attached to the cylinder block 24 and which detects and outputs a rotation phase of a crank shaft 24c with the piston 24a connected thereto via a connecting rod 24b, that is, a crank angle, to the ECU 15. The operating status determination section 15a of the ECU 15 determines the rotation phase of the crank shaft 24a, the number of rotations of the engine, the driving speed of the vehicle, and the like in real time based on the information from the crank angle sensor 25.

The exhaust pipe 23 connected to the cylinder head 12 so as to communicate with the exhaust port 12b defines an exhaust passage 23a together with the exhaust port 12b. An exhaust emission purifier 26 adapted to detoxify harmful substances generated by combustion of mixed air in the combustion chamber 10a is mounted in the middle of a part of the exhaust pipe 23 located upstream of the muffler (not shown in the drawings) attached to a downstream end side. The exhaust emission purifier 26 according to the present embodiment includes at least an oxidation catalyst but may incorporate a DPF (Diesel Particulate Filter), a NO_{X} storage catalyst, and the like. The oxidation catalyst is adapted to oxidize, that is, combust unburned HC and the like mainly contained in exhaust.

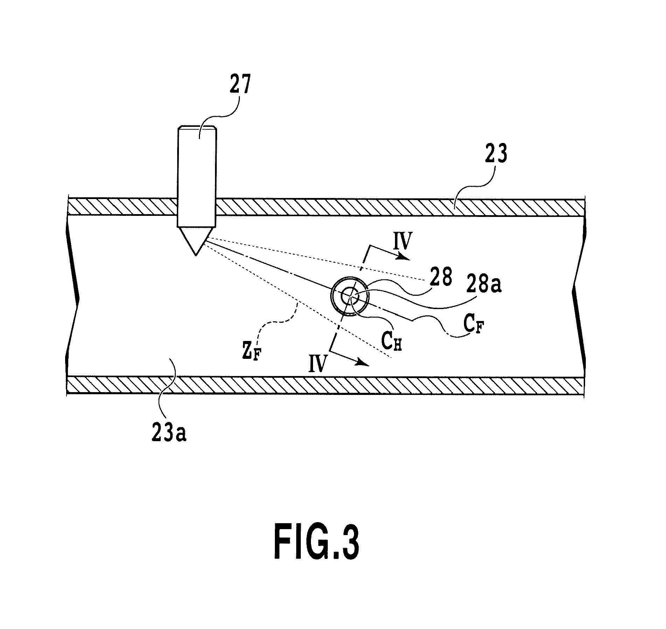

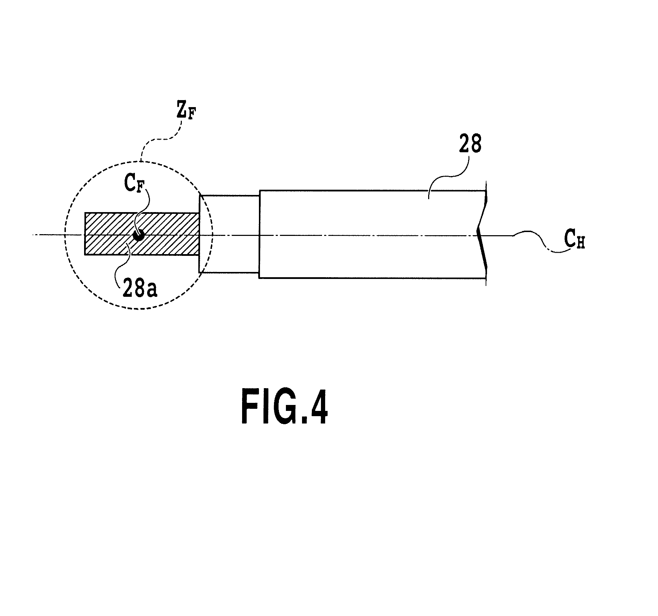

The exhaust heating apparatus 22 is disposed in the middle of a part of the exhaust pipe 23 located upstream of the exhaust emission purifier 26; the exhaust heating apparatus 22 is adapted to generate heating gas and to feed the heating gas to the exhaust emission purifier 26 disposed downstream of the exhaust heating apparatus 22 in order to activate the oxidation catalyst and keep the oxidation catalyst active. Fig. 3 show an extracted and enlarged essential part of the exhaust heating apparatus 22. Fig. 4 shows an enlarged cross-sectional structure of the essential part; this cross-sectional view is taken along line IV-IV in Fig. 3. According to the present embodiment, the exhaust heating apparatus 22 includes a fuel addition valve 27 and a glow plug 28.

The fuel addition valve 27 has the same basic configuration as that of the ordinary fuel injection valve 11 and is adapted to be able to feed any amount of fuel in pulse form into the exhaust passage 23a at any time intervals by controlling time for energization. In this case, the amount of fuel injected through the fuel addition valve during a single injection operation is set to between 10 mm³ and 75 mm³ when the fuel is intermittently fed into the exhaust passage. The duration of injection during a single injection operation is set to between 1.5 ms and 15 ms. If the amount of fuel injected during a single injection operation is less than 10 mm³ or the duration of injection is shorter than 1.5 ms, the air-fuel ratio measured around the heat generating portion 28a of the glow plug 28 becomes excessively lean, leading to degraded combustion diffusion performance. In contrast, if the amount of fuel injected during a single injection operation is more than 75 mm³ or the duration of injection is longer than 15 ms, the latent heat of vaporization of the fuel reduces the surface temperature of the heat generating portion 28a, leading to improper combustion and an increased amount of soot generated. As a result, emission is deteriorated.

The fuel can be constantly properly ignited by setting the amount of fuel injected through the fuel addition valve during a single injection operation to between 10 mm³ and 75 mm³ and setting the duration of injection to between 1.5 ms and 15 ms. This also allows proper combustion to be constantly and more reliably achieved and enables an increase in the amount of soot generated to be reliably suppressed.

The amount of fuel fed into the exhaust passage 23a through the fuel addition valve 27 is set by a fuel addition setting section 15f of the ECU 15 based on the operating status of the vehicle including the amount of intake air and air /fuel ratio detected by the airflow meter 21. However, the amount of fuel injected through the fuel addition valve 27 per unit time is set to between 80 cc and 1,000 cc per minute. If the amount of fuel injected through the fuel addition valve 27 per unit time is less than 80 cc, the air-fuel ratio measured around the heat generating portion 28a of the glow plug 28 becomes excessively lean, leading to degraded combustion diffusion performance. In contrast, if the amount of fuel injected through the fuel addition valve 27 per unit time is more than 1,000 cc, the latent heat of vaporization of the fuel reduces the surface temperature of the heat generating portion 28a, leading to improper combustion and an increased amount of soot generated. As a result, emission is deteriorated.

Thus, proper initial frame can be formed and an appropriate flame propagation state can be maintained by setting the amount of fuel injected through the fuel addition valve 27 per unit time to between 80 cc and 1,000 cc per minute. As a result, proper combustion can be more reliably achieved.

A fuel addition valve driving section 15g of the ECU 15 controls operation of the fuel addition valve 27 so that an amount of fuel set by the fuel addition setting section 15f is injected through the fuel addition valve 27 at a set period.

The glow plug 28 serving as ignition means according to the present invention is connected to an onboard power source (not shown in the drawings) via a glow plug driving section 15h of the ECU 15 serving as an on/off switch. Thus, the glow plug 28 is controllably switched between an energized state and a non-energized state by the glow plug driving section 15h of the ECU 15 in accordance with a preset program. The glow plug 28 includes the heat generating portion 28a adapted to ignite fuel injected into the exhaust passage 23a. The heat generating portion 28a is disposed in the exhaust passage 23a so as to lie in an injection region Z_{F} for the fuel injected through the fuel addition valve 27 to diffuse in conical form. In this case, the area (shaded in Fig. 4) of a part of the heat generating portion 28a which overlaps the injection region Z_{F} projected on a plane perpendicular to a center axis C_{F} of the injection region Z_{F} and which contains an axis C_{H} of the heat generating portion 28a is set to between 8% and 55% of the area (shown by a circular dashed line in Fig. 4) of the fuel injection region Z_{F}. If the rate of fuel directly contacting the heat generating portion 28a of the glow plug 28 is less than 8%, even though the fuel impinging on the heat generating portion 28a is ignited, a flame is restrained from diffusing and is lost because the oxygen in the exhaust around the heat generating portion 28a has a low concentration. When the rate is maintained at 8% or more, the combustion can be continued by propagation of the flame to the surrounding fuel. On the other hand, if the rate of fuel directly contacting the heat generating portion 28a of the glow plug 28 is more than 55%, droplets of the fuel with large particle sizes reside in the flame, leading to a significantly increased amount of soot generated. Setting the rate to at most 55% allows the amount of soot generated to be restrained from increasing.

Thus, setting the area of the heat generating portion 28a to between 8% and 55% of the area of the injection region Z_{F} enables sufficient air-fuel mixture to be formed around the heat generating portion 28a without excessively cooling the heat generating portion 28a. As a result, the amount of soot generated can be restrained from increasing, with proper combustion constantly achieved.

Such an impinging plate as disclosed in Patent Literature 1 can be disposed downstream of the heat generating portion 28a of the glow plug 28 in a direction in which the fuel is injected through the fuel injection valve 27. The presence of the impinging plate enables the fuel fed through the fuel injection valve 26 to be received to promote atomization and flying toward the glow plug 28.

A part of the exhaust passage 23a located on an exit side of the exhaust emission purifier 26 incorporates a catalytic converter temperature sensor 29 that detects the temperature of exhaust exiting the exhaust emission purifier 26 (this temperature is hereinafter referred to as a catalyst temperature). Furthermore, an exhaust temperature sensor 30 is attached to a part of the exhaust pipe 23 located upstream of the exhaust emission purifier 26 and downstream of the exhaust heating apparatus 22. The exhaust temperature sensor 30 detects the temperature T_{E} of exhaust flowing through the exhaust passage 23a immediately before the exhaust flows into the exhaust emission purifier 26. The exhaust temperature sensor 30 then outputs the detection information to the ECU 13.

The operating status determination section 15a of the ECU 13 according to the present embodiment determines whether the exhaust heating apparatus 22 needs to be actuated, that is, whether or not fuel addition is required, based on the information from the catalytic converter temperature sensor 29 and the exhaust temperature sensor 30. Normally, the lowest temperature at which the oxidation catalyst can maintain its active state is defined as a reference, and the need for fuel addition is determined if the catalyst temperature is lower than the reference or is expected to be lower than the reference. However, any other conventional well-known method for determination may be adopted as necessary.

According to the present embodiment, while the engine 10 is in a motoring state, that is, the engine 10 is in operation, if the opening of the accelerator pedal 14 becomes zero to bring the engine 10 into a fuel cut state in which no fuel is injected through the fuel injection valve 11, an exhaust heating process is carried out as necessary. That is, upon determining that the oxidation catalyst needs to be activated or kept active, the apparatus injects fuel through the fuel injection valve 27 and heats exhaust flowing through the exhaust passage 23a. Thus, when the engine 10 is in the fuel cut state, fuel is injected into the combustion chamber 30 through the fuel addition valve 27 via a fuel injection chamber 31, thus increasing the temperature of exhaust flowing through the exhaust passage 23a. However, if the exhaust flowing through the exhaust passage 23a has a flow rate Q_{A} of 50 grams per second, even when the fuel is partly ignited by the heat generating portion 28a, the fire is likely to be lost, making continuous combustion of the fuel difficult. Consequently, the exhaust heating process is not carried out.

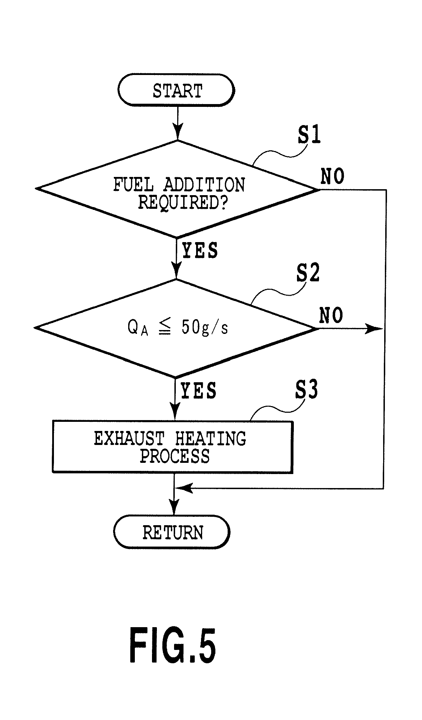

Fig. 5 shows the exhaust heating process. That is, step S1 determines whether or not fuel addition is required. Here, if the apparatus determines that fuel addition is required, that is, the exhaust emission purifier 26 needs to be activated, the processing shifts to step S2 to determine whether or not an intake flow rate Q_{A} is 50 grams per second or less. Here, if the processing determines that the intake flow rate Q_{A} is 50 grams per second or less, that is, execution of the exhaust heating process poses no problem, the processing shifts to step S3 to carry out the exhaust heating process. Then, fuel is injected into the exhaust passage 23a through the fuel addition valve 27 and ignited and combusted by the heat generating portion 28a of the glow plug 28 to increase the temperature of exhaust flowing through the exhaust passage 23a.

On the other hand, upon determining in step S1 that fuel addition is not required, the processing performs no operation and repeats the determination. Furthermore, upon determining in step S2 that the intake flow rate Q_{A} is more than 50 grams per second, that is, avoiding the exhaust heating process is preferred, the processing also performs no operation and returns to step S1.

It should be noted that, the present invention should be interpreted based only upon the matters described in claims, and in the aforementioned embodiments, all changes and modifications included within the spirit of the present invention can be made other than the described matters. That is, all the matters in the described embodiments are made not to limit the present invention, but can be arbitrarily changed according to the application, the object and the like, including every construction having no direct relation to the present invention.

### Reference Signs List

- 10: ENGINE
- 10a: COMBUSTION CHAMBER
- 11: FUEL INJECTION VALVE
- 12: CYLINDER HEAD
- 12a: INTAKE PORT
- 12b: EXHAUST PORT
- 13a: INTAKE VALVE
- 13b: EXHAUST VALVE
- 14: ACCELERATOR PEDAL
- 15: ECU
- 15a: OPERATING STATUS DETERMINATION SECTION
- 15b: FUEL INJECTION SETTING SECTION
- 15c: FUEL INJECTION VALVE DRIVING SECTION
- 15d: THROTTLE OPENING SETTING SECTION
- 15e: ACTUATOR DRIVING SECTION
- 15f: FUEL ADDITION SETTING SECTION
- 15g: FUEL INJECTION VALVE DRIVING SECTION
- 15h: GLOW PLUG DRIVING SECTION
- 16: ACCELERATOR OPENING SENSOR
- 17: INTAKE PIPE
- 17a: INTAKE PASSAGE
- 18: SURGE TANK
- 19: THROTTLE ACTUATOR
- 20: THROTTLE VALVE
- 21: AIRFLOW METER
- 22: EXHAUST HEATING APPARATUS
- 23: EXHAUST PIPE
- 23a: EXHAUST PASSAGE
- 24: CYLINDER BLOCK
- 24a: PISTON
- 24b: CONNECTING ROD
- 24c: CRANK SHAFT
- 25: CRANK ANGLE SENSOR
- 26: EXHAUST EMISSION PURIFIER
- 27: FUEL ADDITION VALVE
- 28: GLOW PLUG
- 28a: HEAT GENERATING PORTION
- 29: CATALYTIC CONVERTER TEMPERATURE SENSOR
- 30: EXHAUST TEMPERATURE SENSOR
- C_{F}: CENTER AXIS OF INJECTION REGION
- C_{H}: AXIS OF HEAT GENERATING PORTION
- Q_{A}: INTAKE FLOW RATE
- T_{E}: EXHAUST TEMPERATURE
- Z_{F}: FUEL INJECTION REGION

## Claims

1. A method for heating exhaust introduced to an exhaust emission purifier by injecting fuel into an exhaust passage through a fuel addition valve toward a heat generating portion of an ignition means disposed in the exhaust passage located upstream of the exhaust emission purifier, and then igniting the fuel, the method being **characterized:**
**in that** a rate of the fuel injected through the fuel addition valve which directly contacts the heat generating portion is set to between 8% and 55%.

2. The method for heating exhaust as claimed in Claim 1, **characterized in that** an amount of fuel injected, during a single injection operation, through the fuel addition valve when the fuel is intermittently injected into the exhaust passage, is set to between 10 mm³ and 75 mm³.

3. The method for heating exhaust as claimed in Claim 2, **characterized in that** duration of injection through the fuel addition valve during a single injection operation is set to between 1.5 ms and 15 ms.

4. The method for heating exhaust as claimed in any one of Claims 1 to 3, **characterized in that** an amount of fuel injected through the fuel addition valve per unit time is set to between 80 cc and 1,000 cc per minute.

5. The method for heating exhaust as claimed in any one of Claims 1 to 4, **characterized in that** the fuel injected through the fuel addition valve diffuses in conical form, and an area of the heat generating portion which overlaps the conical fuel injection region projected on a plane perpendicular to a center axis of the fuel injection region and containing an axis of the heat generating portion is set to between 8% and 55% of an area of the fuel injection region.

6. The method for heating exhaust as claimed in any one of Claims 1 to 5, **characterized in that** the fuel injected though the fuel injection valve is light oil or biofuel.

7. The method for heating exhaust as claimed in any one of Claims 1 to 6, **characterized in that** the heat generating portion of the ignition means is heated and the fuel is injected into the exhaust passage through the fuel addition valve only if exhaust flowing through the exhaust passage has a flow rate of 50 grams per second or less.
